# EUROPEAN PATENT APPLICATION

(11) **EP 4 450 582 A1**
(43) Date of publication of application: **23.10.2024**
(21) Application number: 22908025.4
(22) Date of filing: 16.12.2022
(51) Int. Cl.: C09J 175/04, C09J 11/08, C09D 175/04, C09D 7/65, C08G 18/76, C08G 18/32, C08L 63/00, B32B 15/01, B32B 7/12

(54) **ADHESIVE COATING COMPOSITION FOR ELECTRICAL STEEL SHEET, ELECTRICAL STEEL SHEET LAMINATE, AND METHOD FOR MANUFACTURING SAME**

(30) Priority: 17.12.2021 KR 20210181910
(71) Applicant: POSCO Co., Ltd, Pohang-si, Gyeongsangbuk-do 37859 (KR)
(72) Inventor: HA, Bongwoo, Pohang-si, Gyeongsangbuk-do 37859 (KR); KIM, Jungwoo, Pohang-si, Gyeongsangbuk-do 37859 (KR); NO, Taeyoung, Pohang-si, Gyeongsangbuk-do 37859 (KR); LEE, Donggyu, Pohang-si, Gyeongsangbuk-do 37859 (KR)
(74) Representative: Meissner Bolte Partnerschaft mbB
(86) International application number: PCT/KR2022/020643
(87) International publication number: WO 2023/113560

(57) **Abstract**

The present disclosure provides an electrical steel sheet adhesive coating composition containing a mixed resin of a polyurethane resin and an epoxy resin, wherein the mixed resin includes, with respect to 100 parts by weight of the mixed resin, 55 to 98 parts by weight of the polyurethane resin and 2 to 45 parts by weight of the epoxy resin, and the polyurethane resin is formed by reacting an aromatic diisocyanate monomer and a polyol, an electrical steel sheet laminate using the same, and a method for manufacturing the same.

## Description

### [Technical Field]

An exemplary embodiment of the present disclosure relates to an electrical steel sheet adhesive coating composition, an electrical steel sheet laminate, and a method for manufacturing the same. More particularly, an exemplary embodiment of the present disclosure relates to an electrical steel sheet adhesive coating composition for forming a fusion layer capable of bonding (coupling) electrical steel sheets without using the existing coupling method such as welding, clamping, or interlocking, an electrical steel sheet laminate, and a method for manufacturing the same. Still more particularly, an exemplary embodiment of the present disclosure relates to an electrical steel sheet adhesive coating composition that improves adhesive strength and noise suppression characteristics of an electrical steel sheet laminate by controlling components of a fusion layer formed between electrical steel sheets, an electrical steel sheet laminate, and a method for manufacturing the same.

### [Background Art]

A non-oriented electrical steel sheet is a steel sheet of which a magnetic characteristic is uniform in all directions on a rolling plate, and is widely used for a motor, an iron core of a generator, an electric motor, and a small transformer.

The electrical steel sheet may be classified into two types, including a type in which stress relief annealing (SRA) should be performed to improve a magnetic characteristic after punching, and a type in which stress relief annealing is omitted when a cost of a heat treatment is greater than an effect of the magnetic characteristic obtained by the stress relief annealing.

An insulation film is a film coated in a final manufacturing process for a laminate such as a motor, an iron core of a generator, an electric motor, or a small transformer, and generally requires an electrical characteristic of suppressing generation of an eddy current. In addition, continuous punching workability, adhesion resistance, surface adhesion, and the like are required. The continuous punching workability refers to an ability of suppressing abrasion of a mold when punching is performed with a predetermined shape and a plurality of steel sheets are stacked to form an iron core. The adhesion resistance refers to an ability of not allowing the steel sheets of the iron core to be adhered to each other after a stress relief annealing process for recovering the magnetic characteristic by eliminating a processing stress of the steel sheet.

In addition to such basic characteristics, excellent coating workability of a coating solution, stability of a solution to be usable for a long time after mixing, and the like are required. The insulation film may be manufactured into an electrical steel sheet laminate when an additional coupling method such as welding, clamping, or interlocking should be used.

### [Disclosure]

### [Technical Problem]

The present disclosure has been made in an effort to provide an electrical steel sheet laminate in which a fusion layer capable of bonding (coupling) electrical steel sheets is formed without using the existing coupling method such as welding, clamping, or interlocking. More particularly, the present disclosure has been made in an effort to provide an electrical steel sheet adhesive coating composition that improves adhesive strength between electrical steel sheets by controlling components of a fusion layer formed between the electrical steel sheets, an electrical steel sheet laminate, and a method for manufacturing the same.

### [Technical Solution]

An exemplary embodiment of the present disclosure provides an electrical steel sheet adhesive coating composition containing a mixed resin of a polyurethane resin and an epoxy resin, wherein the mixed resin includes, with respect to 100 parts by weight of the mixed resin, 55 to 98 parts by weight of the polyurethane resin and 2 to 45 parts by weight of the epoxy resin, and the polyurethane resin is formed by reacting an aromatic diisocyanate monomer represented by the following Chemical Formula 1 and a polyol.

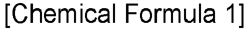

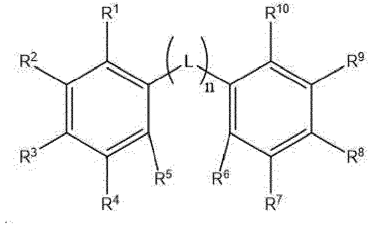

In Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, any one of R¹ to R⁵ is an isocyanate group, any one of R⁶ to R¹⁰ is an isocyanate group, a case where R³ and R⁸ are simultaneously isocyanate groups is excluded, L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n is any integer from 1 to 10.

In Chemical Formula 1, any one of R¹ to R⁵ may be an isocyanate, any one of R⁶ to R¹⁰ may be an isocyanate, a case where R³ and R⁸ are simultaneously isocyanates may be excluded, and a case where R¹ and R¹⁰ are simultaneously isocyanates may be further excluded.

In Chemical Formula 1, any one of R¹ to R⁵ may be an isocyanate, any one of R⁶ to R¹⁰ may be an isocyanate, and a case where any one of R¹ to R⁵ and any one of R⁶ to R¹⁰ are simultaneously isocyanates symmetrically around L may be further excluded.

The aromatic diisocyanate monomer represented by Chemical Formula 1 may be represented by the following Chemical Formula 2.

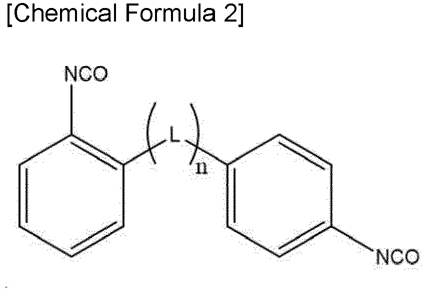

In Chemical Formula 2,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.

The polyol may be a compound represented by the following Chemical Formula 3.

[Chemical Formula 3] **HO——R'——OH**

In Chemical Formula 3,
R¹ is a substituted or unsubstituted C1 to C10 alkyl group, a substituted or unsubstituted C6 to C20 aryl group, or a substituted or unsubstituted C5 to C20 heteroaryl group.

The polyurethane resin may contain 30 to 50 wt% of the aromatic diisocyanate monomer and 50 to 70 wt% of the polyol.

The epoxy resin may have a molecular weight of 5,000 to 20,000 and a hydroxyl value of 2 to 20 mgKOH/g.

The electrical steel sheet adhesive coating composition according to an exemplary embodiment of the present disclosure may further contain one or more selected from the group consisting of a coupling agent, a wetting agent, a curing agent, and a curing catalyst.

The coupling agent may be contained in an amount of 0.2 parts by weight to 3 parts by weight with respect to 100 parts by weight of the mixed resin.

The curing agent may be contained in an amount of 0.5 parts by weight to 2 parts by weight with respect to 100 parts by weight of the mixed resin.

The curing catalyst may be contained in an amount of 0.1 parts by weight to 1 part by weight with respect to 100 parts by weight of the mixed resin.

The wetting agent may be contained in an amount of 0.05 parts by weight to 0.5 parts by weight with respect to 100 parts by weight of the mixed resin.

Another exemplary embodiment of the present disclosure provides an electrical steel sheet laminate including a plurality of electrical steel sheets; and a fusion layer located between the plurality of electrical steel sheets, wherein the fusion layer contains a mixed resin of a polyurethane resin and an epoxy resin, the mixed resin includes, with respect to 100 parts by weight of the mixed resin, 55 to 98 parts by weight of the polyurethane resin and 2 to 45 parts by weight of the epoxy resin, and the polyurethane resin is formed by reacting an aromatic diisocyanate monomer represented by the following Chemical Formula 1 and a polyol.

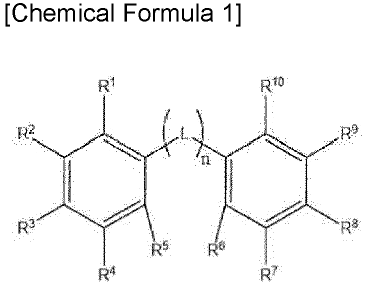

In Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, any one of R¹ to R⁵ is an isocyanate group, any one of R⁶ to R¹⁰ is an isocyanate group, a case where R³ and R⁸ are simultaneously isocyanate groups is excluded, L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n is any integer from 1 to 10.

Still another exemplary embodiment of the present disclosure provides a method for manufacturing an electrical steel sheet laminate, the method including applying an adhesive coating composition to one surface or both surfaces of an electrical steel sheet and then curing the adhesive coating composition to form an adhesive coating layer; and stacking a plurality of electrical steel sheets in which the adhesive coating layer is formed and performing heat fusion to form a fusion layer, wherein the adhesive coating composition contains a mixed resin of a polyurethane resin and an epoxy resin, the mixed resin includes, with respect to 100 parts by weight of the mixed resin, 55 to 98 parts by weight of the polyurethane resin and 2 to 45 parts by weight of the epoxy resin, and the polyurethane resin is formed by reacting an aromatic diisocyanate monomer represented by the following Chemical Formula 1 and a polyol.

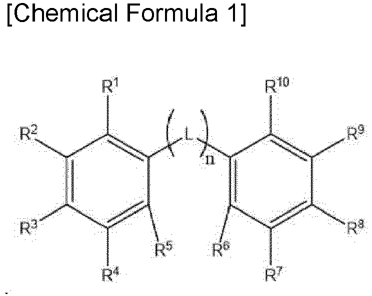

In Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, any one of R¹ to R⁵ is an isocyanate group, any one of R⁶ to R¹⁰ is an isocyanate group, a case where R³ and R⁸ are simultaneously isocyanate groups is excluded, L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n is any integer from 1 to 10.

### [Advantageous Effects]

According to an exemplary embodiment of the present disclosure, the adhesive strength between the electrical steel sheets may be improved by controlling the components of the fusion layer formed between the electrical steel sheets.

According to an exemplary embodiment of the present disclosure, the electrical steel sheets may be adhered without using the existing coupling method such as welding, clamping, or interlocking, and therefore, the noise and vibration suppression effect of the electrical steel sheet laminate is more excellent.

### [Description of the Drawings]

FIG. 1 is a schematic view of an electrical steel sheet laminate.
FIG. 2 is a schematic view of a cross section of the electrical steel sheet laminate according to an exemplary embodiment of the present disclosure.

### [Mode for Invention]

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present disclosure.

Terminologies used herein are to mention only a specific exemplary embodiment, and are not to limit the present disclosure. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

In the present specification, the term "substitution" means that at least one hydrogen in a compound is substituted with a C1 to C30 alkyl group; a C1 to C10 alkoxy group; a silane group; an alkylsilane group; an alkoxysilane group; or an ethyleneoxyl group, unless otherwise defined.

In the present specification, the term "hetero" means an atom selected from the group consisting of N, O, S, and P, unless otherwise defined.

The alkyl group may be a C1 to C20 alkyl group, and specifically a C1 to C6 lower alkyl group, a C7 to C10 intermediate alkyl group, or a C11 to C20 higher alkyl group.

For example, a C1 to C4 alkyl group means that 1 to 4 carbon atoms are present in an alkyl chain, and is selected from the group consisting of methyl, ethyl, propyl, iso-propyl, n-butyl, iso-butyl, sec-butyl, and t-butyl.

Examples of a typical alkyl group include a methyl group, an ethyl group, a propyl group, an isopropyl group, a butyl group, an isobutyl group, a t-butyl group, a pentyl group, a hexyl group, a cyclopropyl group, a cyclobutyl group, a cyclopentyl group, and a cyclohexyl group.

Hereinafter, exemplary embodiments of the present disclosure will be described in detail with reference to the accompanying drawings so that those skilled in the art to which the present disclosure pertains may easily practice the present disclosure. However, the present disclosure may be implemented in various different forms and is not limited to exemplary embodiments described herein.

An electrical steel sheet adhesive coating composition according to an exemplary embodiment of the present disclosure may contain a mixed resin of a polyurethane resin and an epoxy resin, wherein the mixed resin may include, with respect to 100 parts by weight of the mixed resin, 55 to 98 parts by weight of the polyurethane resin and 2 to 45 parts by weight of the epoxy resin, and the polyurethane resin may be formed by reacting an aromatic diisocyanate monomer represented by the following Chemical Formula 1 and a polyol.

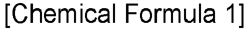

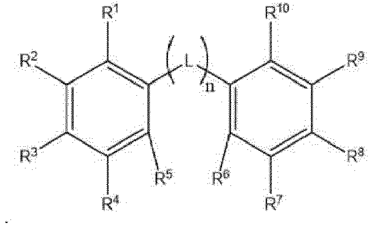

In Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, any one of R¹ to R⁵ is an isocyanate group, any one of R⁶ to R¹⁰ is an isocyanate group, a case where R³ and R⁸ are simultaneously isocyanate groups is excluded, L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n is any integer from 1 to 10.

In an exemplary embodiment of the present disclosure, the mixed resin may include, with respect to 100 parts by weight of the mixed resin, 55 to 98 parts by weight of the polyurethane resin and 2 to 45 parts by weight of the epoxy resin. When the amount of the polyurethane resin added is too large, high-temperature adhesive strength may be deteriorated due to a low crosslinking degree of a mixed resin layer, and when the amount of the polyurethane resin added is too small, a vibration suppression effect may be deteriorated due to low viscoelastic properties of the mixed resin layer. When the amount of the epoxy resin added is too large, the vibration suppression effect may be deteriorated due to the low viscoelastic properties of the mixed resin layer caused by a high crosslinking degree of the mixed resin layer, and when the amount of the epoxy resin added is too small, the high-temperature adhesive strength may be deteriorated due to a low crosslinking degree of the mixed resin layer.

In Chemical Formula 1, any one of R¹ to R⁵ may be an isocyanate, any one of R⁶ to R¹⁰ may be an isocyanate, a case where R³ and R⁸ are simultaneously isocyanates may be excluded, and a case where R¹ and R¹⁰ are simultaneously isocyanates may be further excluded.

In Chemical Formula 1, any one of R¹ to R⁵ may be an isocyanate, any one of R⁶ to R¹⁰ may be an isocyanate, and a case where any one of R¹ to R⁵ and any one of R⁶ to R¹⁰ are simultaneously isocyanates symmetrically around L may be further excluded.

In the case where an isocyanate is bonded to a position symmetrical about L in Chemical Formula 1, the manufactured electrical steel sheet laminate cannot be used for self-bonding due to deterioration of coating adhesion, peeling adhesive strength, or ATF resistance.

The aromatic diisocyanate monomer represented by Chemical Formula 1 may be represented by the following Chemical Formula 2.

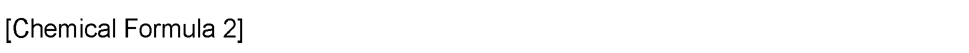

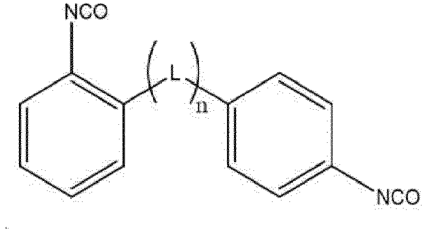

In Chemical Formula 2,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.

The polyol may be a compound represented by the following Chemical Formula 3.

[Chemical Formula 3] HO-R'-OH

In Chemical Formula 3, R' is a substituted or unsubstituted C1 to C10 alkyl group, a substituted or unsubstituted C6 to C20 aryl group, or a substituted or unsubstituted C5 to C20 heteroaryl group. Specifically, the polyol may be polypropylene glycol.

The polyol may have a number average molecular weight of 400 to 1,000 g/mol.

The polyurethane resin may contain 30 to 50 wt% of the aromatic diisocyanate monomer and 50 to 70 wt% of the polyol. When a ratio of the aromatic diisocyanate monomer is too small, high-temperature coupling force of the polyurethane resin may be deteriorated, and when the ratio of the aromatic diisocyanate monomer is too large, heat fusibility may be deteriorated. When a ratio of the polyol is too small, the heat fusibility may be deteriorated, and when the ratio of the polyol is too large, due to tacky properties, sticky defects may occur when stored in a coiled form for a long time.

The epoxy resin may have a molecular weight of 5,000 to 20,000 and a hydroxyl value of 2 to 20 mgKOH/g.

The electrical steel sheet adhesive coating composition according to an exemplary embodiment of the present disclosure may further contain one or more selected from the group consisting of a coupling agent, a wetting agent, a curing agent, and a curing catalyst.

The electrical steel sheet adhesive coating composition according to an exemplary embodiment of the present disclosure may further contain a coupling agent to strengthen interfacial adhesive strength between an electrical steel sheet 10 and a fusion layer 20. The coupling agent may include a silane coupling agent, and more specifically, may include one or more of a vinyl-based silane coupling agent and a methacryloxy-based silane coupling agent. Examples of the vinyl-based silane coupling agent include vinyl trimethoxy silane and vinyl triethoxy silane. Examples of the methacryloxy-based silane coupling agent include 3-methacryloxypropyl methyldimethoxysilane, 3-methacryloxpropyl trimethoxysilane, 3-methacyloxypropyl methyldiethoxysilane, and 3-methacryloxpropyl triethoxysilane.

The electrical steel sheet adhesive coating composition according to an exemplary embodiment of the present disclosure may further contain a silicone-based wetting agent in the adhesive coating composition to strengthen the interfacial adhesive strength between the electrical steel sheet 10 and the fusion layer 20. Examples of a silicone-based wetting additive include polyether-modified polydimethylsiloxane. The wetting agent may be added to a bonding composition for an electrical steel sheet to strengthen the interfacial adhesive strength between the electrical steel sheet and the fusion layer.

The electrical steel sheet adhesive coating composition according to an exemplary embodiment of the present disclosure may further contain a curing agent to adjust reactivity of a surface of the adhesive coating layer. The curing agent may include an aliphatic amine-based, aromatic amine-based, amino amine-based, or imidazole-based curing agent. More specifically, the curing agent may include a dicyandiamide-based curing agent.

The electrical steel sheet adhesive coating composition according to an exemplary embodiment of the present disclosure may further contain a curing catalyst to solve sticky defects caused by non-curing due to a rapid curing reaction during coil coating. The curing catalyst may include an imidazole-based curing catalyst.

The electrical steel sheet adhesive coating composition according to an exemplary embodiment of the present disclosure may contain the coupling agent in an amount of 0.2 parts by weight to 3 parts by weight with respect to 100 parts by weight of the mixed resin. Specifically, the coupling agent may be contained in an amount of 0.2 parts by weight to 1 part by weight. When the amount of the coupling agent added is too small, the effect of strengthening the interfacial adhesive strength between the electrical steel sheet and the fusion layer may not be sufficiently achieved. When the amount of the coupling agent added is too large, a precipitate may be formed in the adhesive coating composition due to a reaction between the coupling agents.

The electrical steel sheet adhesive coating composition according to an exemplary embodiment of the present disclosure may contain the curing agent in an amount of 0.5 parts by weight to 2 parts by weight with respect to 100 parts by weight of the mixed resin. Specifically, the curing agent may be contained in an amount of 0.8 parts by weight to 1.2 parts by weight. The curing agent serves to control the reactivity of the surface of the adhesive coating layer. When the amount of the curing agent added is too small, as the curing reaction of the fusion layer is deteriorated, sticky properties of the surface of the fusion layer may become poor. Conversely, when the amount of the curing agent added is too large, the coupling force may be deteriorated after low-temperature fusion.

The electrical steel sheet adhesive coating composition according to an exemplary embodiment of the present disclosure may contain the curing catalyst in an amount of 0.1 parts by weight to 1 part by weight with respect to 100 parts by weight of the mixed resin. Specifically, the curing catalyst may be contained in an amount of 0.3 parts by weight to 0.8 parts by weight. When the content of the curing catalyst is too large, the coupling force after fusion may be deteriorated due to an over-curing reaction, and when the content of the curing catalyst is too small, the surface of the fusion layer may become sticky due to non-curing.

The electrical steel sheet adhesive coating composition according to an exemplary embodiment of the present disclosure may contain the wetting agent in an amount of 0.05 parts by weight to 0.5 parts by weight with respect to 100 parts by weight of the mixed resin. Specifically, the wetting agent may be contained in an amount of 0.05 parts by weight to 0.15 parts by weight. When the content of the wetting agent is too large, coating layer defects may occur due to excessive bubbles generated in a coating solution, and when the content of the wetting agent is too small, defects may occur on the coating surface due to deterioration of wettability of the coating layer.

In addition to the components described above, the adhesive coating composition may contain a solvent to facilitate application and to uniformly disperse the components. The solvent may include water, alcohol, and the like. The solvent may be contained in an amount of 1 to 20 parts by weight with respect to 100 parts by weight of the mixed resin.

In an exemplary embodiment of the present disclosure, an electrical steel sheet laminate is provided.

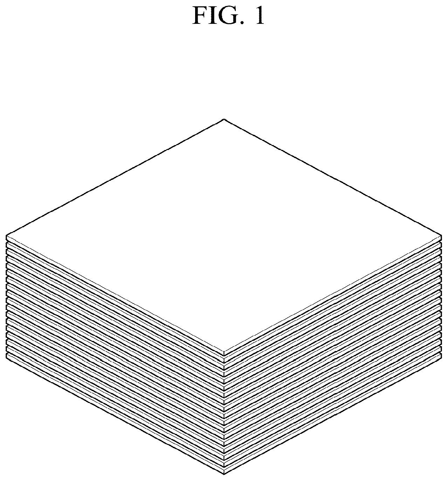

The electrical steel sheet laminate according to an exemplary embodiment of the present disclosure includes a plurality of electrical steel sheets; and a fusion layer located between the plurality of electrical steel sheets. FIG. 1 illustrates a schematic view of the electrical steel sheet laminate according to an exemplary embodiment of the present disclosure. As illustrated in FIG. 1, the plurality of electrical steel sheets are stacked.

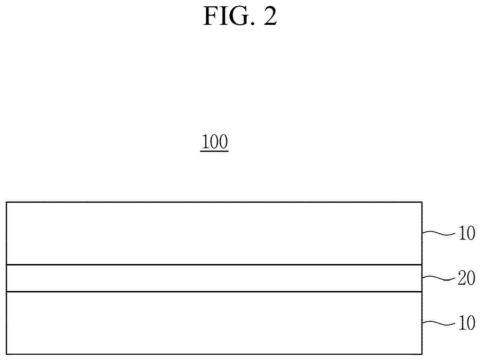

FIG. 2 illustrates a schematic view of a cross section of the electrical steel sheet laminate according to an exemplary embodiment of the present disclosure. As illustrated in FIG. 2, an electrical steel sheet laminate 100 according to an exemplary embodiment of the present disclosure includes a plurality of electrical steel sheets 10 and a fusion layer 20 located between the plurality of electrical steel sheets.

The electrical steel sheet laminate according to an exemplary embodiment of the present disclosure may be a laminate in which different electrical steel sheets are heat-fused by simply forming a fusion layer using the adhesive coating composition described above without using the existing method such as welding, clamping, or interlocking.

In this case, the electrical steel sheet laminate has excellent high-temperature adhesion and high-temperature oil resistance even after heat fusion.

Hereinafter, each component will be described in detail.

As the electrical steel sheet 10, a general non-oriented or oriented electrical steel sheet may be used without limitation. In an exemplary embodiment of the present disclosure, since the main configuration is to manufacture the electrical steel sheet laminate 100 by forming the fusion layer 20 between the plurality of electrical steel sheets 10, a detailed description of the electrical steel sheet 10 will be omitted.

The fusion layer 20 is formed between the plurality of electrical steel sheets 10, and has strong adhesive strength so that the plurality of electrical steel sheets 10 may be adhered together without using the existing method such as welding, clamping, or interlocking.

The fusion layer 20 is formed by coating the adhesive coating composition to the surface of the electrical steel sheet and curing the adhesive coating composition to form an adhesive coating layer, stacking the electrical steel sheets, and performing heat fusion. When the plurality of electrical steel sheets 10 in which the adhesive coating layer is formed are stacked and subjected to heat fusion, the resin components in the adhesive coating layer is heat-fused to form a fusion layer.

In an exemplary embodiment of the present disclosure, the fusion layer 20 contains a mixed resin of a polyurethane resin and an epoxy resin. Since the polyurethane resin, the epoxy resin, and the mixed resin thereof have been described in detail above in relation to the adhesive coating composition, redundant descriptions will be omitted. During the process of forming the fusion layer, the mixed resin of the polyurethane resin and the epoxy resin remains as is. In addition, the coupling agent, the curing agent, the curing catalyst, and the wetting additive also remain, and content ranges thereof may be the same as those of the adhesive coating composition. Since the coupling agent, the curing agent, the curing catalyst, and the wetting additive are described in detail above in relation to the adhesive coating composition, redundant descriptions will be omitted.

Therefore, the fusion layer may contain 100 parts by weight of a mixed resin, 0.5 parts by weight of a silane coupling agent, 0.1 parts by weight of a silicone-based wetting agent, 1 part by weight of a dicyandiamide-based curing agent, and 0.5 parts by weight of an imidazole-based curing catalyst.

A thickness of the fusion layer 20 may be 1 µm to 8 µm. When the thickness of the fusion layer is too thin, the adhesive strength may decrease rapidly, and when the thickness of the fusion layer is too thick, defects due to sticky properties after coating winding become a problem. More specifically, the thickness of the fusion layer 20 may be 4 µm to 6 µm.

A method for manufacturing an electrical steel sheet laminate according to an exemplary of the present disclosure includes applying an adhesive coating composition to one surface or both surfaces of an electrical steel sheet and then curing the adhesive coating composition to form an adhesive coating layer; and stacking a plurality of electrical steel sheets in which the adhesive coating layer is formed and performing heat fusion to form a fusion layer.

Hereinafter, each step will be described in detail.

First, an adhesive coating composition is prepared. Since the adhesive coating composition is described above, a redundant description will be omitted.

Next, the adhesive coating composition is coated to a surface of an electrical steel sheet and then cured to form an adhesive coating layer. This step may be performed at a temperature range of 150 to 250°C to cure the adhesive coating composition.

A plurality of electrical steel sheets in which the adhesive coating layer is formed are stacked and heat-fused to form a fusion layer 20. Through the heat fusion step, the polymer components in the adhesive coating layer are heat-fused and form a fusion layer.

The heat fusion step may be performed under pressurization conditions of a temperature of 150 to 250°C and a pressure of 0.05 to 5.0 MPa for 0.1 to 120 minutes. The above conditions may be satisfied independently, and two or more conditions may be satisfied simultaneously. The temperature, pressure, and time conditions are controlled in the heat fusion step, such that the electrical steel sheets may be heat-fused densely without gaps or organic phases.

The heat fusion step includes a temperature increase step and a fusion step, and a temperature increase rate of the temperature increase step may be 10°C/min to 1,000°C/min.

Hereinafter, Examples of the present disclosure will be described in detail so that those skilled in the art to which the present disclosure pertains may easily practice the present disclosure. However, the present disclosure may be implemented in various different forms and is not limited to Examples described herein.

### Experimental Example 1

A non-oriented electrical steel sheet (50 x 50 mm, 0.35 mmt) was prepared as a blank specimen. An adhesive coating solution was applied to an upper portion and a lower portion of each prepared blank specimen at a certain thickness using a bar coater and a roll coater, cured at 200°C based on a plate temperature for 20 seconds, and then slowly cooled in the air to form an adhesive coating layer.

As the adhesive coating solution, an adhesive coating solution containing 100 parts by weight of a mixed resin of a polyurethane resin and an epoxy resin, 0.5 parts by weight of a silane coupling agent, 0.1 parts by weight of a silicone-based wetting agent, 1 part by weight of a dicyandiamide-based curing agent, and 0.5 parts by weight of an imidazole-based curing catalyst was used. The polyurethane resin was prepared by reacting, with respect to the total weight of the polyurethane resin, 40 wt% of a 2,4-methylene diphenyl diisocyanate monomer and 60 wt% of polypropylene glycol having a number molecular weight of 425 g/mol, and the epoxy resin having a molecular weight of 1,000 to 20,000 and a hydroxyl value of 2 to 20 mgKOH/g was used. The content ratios of the polyurethane resin and epoxy resin used, and the types and content ratios of the isocyanate monomer and polyol used to prepare the polyurethane resin are shown in Table 1. In addition to the polyurethane resin, a silane coupling agent, a silicone-based wetting agent, a dicyandiamide-based curing agent, and an imidazole-based curing catalyst were contained in amounts of 0.5 parts by weight, 0.1 parts by weight, 1 part by weight, and 0.5 parts by weight, respectively, with respect to 100 parts by weight of the polyurethane resin.

In Table 1, MDI represents methylene diphenyl diisocyanate, TDI represents toluene diisocyanate, and PPG represents polypropylene glycol (number molecular weight of 425 g/mol).

The electrical steel sheets coated with the adhesive coating layer were stacked to a height of 20 mm, pressurized with a force of 0.5 MPa, and then heat-fused at 160°C for 10 minutes to manufacture an electrical steel sheet laminate. A thickness of the fusion layer after heat fusion was about 6 µm. The heat-fused laminate was evaluated according to the mixing ratio of the mixed resin in the coating composition and the type of aromatic diisocyanate monomer used. Specifically, the coating adhesion, peeling adhesive strength (T-peel, N/mm), ATF resistance, damping ratio, and high-temperature adhesion were evaluated and shown in Table 1.

The measurement method for each property is as follows.

Coating adhesion measurement method: A specimen standard for measuring coating adhesion was prepared in accordance with ISO 1519. The coated specimen was prepared as a sample of 30 x 300 mm, the sample was bent at 180° on an iron cylinder having a diameter of 10 mm, a tape was attached to the portion, and then it was visually observed whether the coating layer was peeled off. A case where peeling was observed was evaluated as NG, and a case where peeling was not observed was determined as OK.

Peeling adhesive strength (T-peel, N/mm): A specimen standard for peeling method (T-peel off) measurement was prepared in accordance with ISO 11339. Two sheets of a specimen of 25 x 200 mm were adhered with an area of 25 x 150 mm², and then a non-adhesive region was bent at 90° to prepare a T-shaped tensile specimen. The specimen prepared by the peeling method (T-peel off) was fixed to upper and lower jigs with a certain force, and then peeling adhesive strength was measured using a device for measuring a tensile force of the stacked sample while pulling the specimen at a certain speed. At this time, in the case of the shear strength method, the measured value was measured at a point at which an interface having a minimum adhesive strength in the interface of the stacked sample was released. The temperature of the specimen was maintained at 60°C using a heating device, and then the adhesive strength was measured.

ATF resistance evaluation method: In a case where a drive motor is used in an automobile, a lot of heat is generated when the drive motor rotates at a high speed for a long time, and automotive transmission fluid (ATF) is used to cool the drive motor. Therefore, in order to secure adhesion reliability during long-term use, it is important that the adhesive strength of the stacked coil is maintained while being impregnated with high-temperature ATF. Accordingly, the ATF resistance was evaluated. The manufactured stacked coil was immersed in the ATF at a temperature of 150°C for 500 hours and then tested for shear adhesive strength. The shear adhesive strength for measuring the ATF resistance was measured by a shear strength method. A specimen standard for the shear strength method measurement was prepared in accordance with ISO 4587. Two sheets of a specimen of 25 x 100 mm were adhered with an area of 12.5 x 25 mm² and then heat-fused under the above conditions to prepare a specimen for a shear strength method. The specimen prepared by the shear strength method was fixed to upper and lower jigs with a certain force, and then ATF resistance was measured using a device for measuring a tensile force of the stacked sample while pulling the specimen at a certain speed. At this time, in the case of the shear strength method, the measured value was measured at a point at which an interface having a minimum adhesive strength in the interface of the stacked sample was released.

Evaluation of noise suppression characteristics: A ring-type motor core was manufactured to evaluate noise characteristics generated from a motor core unit among the drive motors. A ring core having an outer diameter of 128 mm, an inner diameter of 90 mm, and a height of 45 mm was manufactured by punching and heat-fusing a product obtained by applying a coating agent to a 0.27 mm non-oriented electrical steel sheet. Axial dynamic characteristics of the ring core manufactured as described above were measured. Usually, in order to determine the dynamic characteristics (natural frequency, natural mode, and damping ratio) of a machine or structure, a transfer function, which is a function that applies an external force and obtains a dynamic response thereto, is used. This is a function that represents a ratio of response to an external force (F). When a frequency is analyzed as a response, particularly, a frequency response function (FRF) is the basic and most frequently used basic function for the dynamic characteristic analysis. A damping ratio was measured by the FRF characteristic analysis. As the damping ratio is higher, the vibration absorption is more excellent, such that less vibration and noise are generated.

Evaluation of high-temperature adhesive strength: Shear adhesive strength for measuring high-temperature adhesive strength was measured by a shear strength method. A specimen standard for the shear strength method measurement was prepared in accordance with ISO 4587. Two sheets of a specimen of 25 × 100 mm were adhered with an area of 12.5 × 25 mm² using a coating agent and heat-fused under the above conditions to prepare a specimen for a shear strength method. The specimen prepared by a shear strength method was set to a high ambient temperature in a tensile machine with a heating furnace and fixed to upper and lower jigs with a certain force, and high-temperature adhesive strength was measured using a device for measuring a tensile force of the stacked sample while pulling the specimen at a certain speed. At this time, in the case of the shear strength method, the measured value was measured at a point at which an interface having a minimum adhesive strength in the interface of the stacked sample was released. The temperature of the specimen was maintained at 160°C using a heating device, and then the adhesive strength was measured.

**[Table 1]**

| Classification | Mixed resin (100 parts by weight) | | Polyurethane resin | | | | | Coating adhesion | Peeling adhesive strength (N/mm) | ATF resistance (MPa) | Damping ratio | High-temperature adhesive strength (MPa) |
|---|---|---|---|---|---|---|---|---|---|---|---|---|
| | Polyurethane resin (parts by weight) | Epoxy resin (parts by weight) | Aromatic diisocyanate | | Polyol | | | | | | | |
| | | | Type | Content (wt%) | Type | Content (wt%) | | | | | | |
| Example 1 | 95 | 5 | 2,4'-MDI | | 40 | PPG | 60 | OK | 3 | 2.0 | 0.1 | 1.5 |
| Example 2 | 80 | 20 | 2,4'-MDI | | 40 | PPG | 60 | OK | 2.5 | 3.0 | 0.07 | 2 |
| Example 3 | 60 | 40 | 2,4'-MDI | | 40 | PPG | 60 | OK | 1.5 | 5.0 | 0.05 | 4 |
| Comparative Example 1 | 100 | 0 | 2,4'-MDI | | 40 | PPG | 60 | OK | 3.5 | 0.5 | 0.12 | 0.05 |
| Comparative Example 2 | 0 | 100 | 2,4'-MDI | | 40 | PPG | 60 | OK | 0.5 | 8.0 | 0.01 | 9 |
| Comparative Example 3 | 50 | 50 | 2,4'-MDI | | 40 | PPG | 60 | OK | 0.7 | 7.0 | 0.02 | 6 |
| Comparative Example 4 | 95 | 5 | 2,4'-TDI | | 30 | PPG | 70 | OK | 0.5 | 3.0 | 0.02 | 2.5 |
| Comparative Example 5 | 95 | 5 | 2,2'-MDI | | 40 | PPG | 60 | OK | 0.7 | 2.5 | 0.02 | 2.0 |
| Comparative Example 6 | 95 | 5 | 4,4'-MDI | | 40 | PPG | 60 | OK | 0.8 | 1.5 | 0.05 | 0.7 |
| Comparative Example 7 | 80 | 20 | 2,4'-TDI | | 30 | PPG | 70 | OK | 0.4 | 3.5 | 0.01 | 3.2 |
| Comparative Example 8 | 80 | 20 | 2,2'-MDI | | 40 | PPG | 60 | OK | 0.6 | 3.2 | 0.01 | 30 |
| Comparative Example 9 | 80 | 20 | 4,4'-MDI | | 40 | PPG | 60 | OK | 0.7 | 1.7 | 0.04 | 2.0 |
| Comparative Example 10 | 60 | 40 | 2,4'-TDI | | 30 | PPG | 70 | OK | 0.3 | 4.0 | 0.01 | 3.3 |
| Comparative Example 11 | 60 | 40 | 2,2'-MDI | | 40 | PPG | 60 | OK | 0.5 | 3.3 | 0.01 | 3.5 |
| Comparative Example 12 | 60 | 40 | 4,4'-MDI | | 40 | PPG | 60 | OK | 0.6 | 1.8 | 0.03 | 2.0 |

As shown in Table 2, as in Examples 1 to 3, when the polyurethane resin and the epoxy resin were mixed at an appropriate content ratio and 2,4-methylene diphenyl diisocyanate (2,4'-MDI) was used as an aromatic diisocyanate monomer, all of the coating adhesion, peeling adhesive strength, ATF resistance, vibration absorption, and high-temperature adhesive strength were excellent.

In the case of Comparative Example 1 in which only the polyurethane resin was used without mixing an epoxy resin, it was confirmed that the coating adhesion, peeling adhesive strength, and vibration absorption were excellent, but the high-temperature adhesive strength was poor because the value thereof was less than 1 MPa, and the ATF resistance was also poor.

In the case of Comparative Example 2 in which only the epoxy resin was used without mixing a polyurethane resin, it was confirmed that the coating adhesion, ATF resistance, and high-temperature adhesive strength were excellent, but the peeling adhesive strength was not excellent, and the damping ratio was less than 0.03, which showed that the noise and vibration suppression effect was poor.

In the case of Comparative Example 3 in which the content of the polyurethane resin was low and the content of the epoxy resin was high, it was confirmed that the coating adhesion, ATF resistance, and high-temperature adhesive strength were excellent, but the peeling adhesive strength and vibration absorption were poor.

In Comparative Examples 4 to 12 and Examples 1 to 3, an adhesive coating layer was prepared by changing the aromatic diisocyanate monomer to a compound other than 2,4-methylene diphenyl diisocyanate (2,4'-MDI).

In the cases of Comparative Examples 4, 7, and 10 in which 2,4-toluene diisocyanate (2,4'-TDI) was used as aromatic diisocyanate, it was confirmed that the coating adhesion, ATF resistance, and high-temperature adhesive strength were excellent, but the peeling adhesive strength and vibration absorption were inferior to those of Examples.

In the cases of Comparative Examples 5, 8, and 11 in which 2,2-methylene diphenyl diisocyanate (2,2'-MDI) was used as aromatic diisocyanate, it was confirmed that the coating adhesion, ATF resistance, and high-temperature adhesive strength were excellent, but the peeling adhesive strength and vibration absorption were inferior to those of Examples.

In the cases of Comparative Examples 6, 9, and 12 in which 4,4-methylene diphenyl diisocyanate (4,4'-MDI) was used as aromatic diisocyanate, it was confirmed that the coating adhesion, vibration absorption, and high-temperature adhesive strength were excellent, but the peeling adhesive strength and ATF resistance were inferior to those of Examples.

The present disclosure is not limited to the exemplary embodiments, but may be manufactured in various different forms, and it will be apparent to those skilled in the art to which the present disclosure pertains that various modifications and alterations may be made without departing from the spirit or essential feature of the present disclosure. Therefore, it is to be understood that the exemplary embodiments described hereinabove are illustrative rather than restrictive in all aspects.

## Claims

1. An electrical steel sheet adhesive coating composition, comprising a mixed resin of a polyurethane resin and an epoxy resin,
wherein the mixed resin includes, with respect to 100 parts by weight of the mixed resin, 55 to 98 parts by weight of the polyurethane resin and 2 to 45 parts by weight of the epoxy resin, and
the polyurethane resin is formed by reacting an aromatic diisocyanate monomer represented by the following Chemical Formula 1 and a polyol: 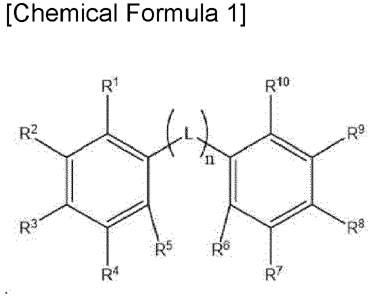
in Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is an isocyanate group,
any one of R⁶ to R¹⁰ is an isocyanate group,
a case where R³ and R⁸ are simultaneously isocyanate groups is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any integer from 1 to 10.

2. The electrical steel sheet adhesive coating composition of claim 1, wherein:
in Chemical Formula 1, any one of R¹ to R⁵ is an isocyanate, any one of R⁶ to R¹⁰ is an isocyanate,
a case where R³ and R⁸ are simultaneously isocyanates is excluded, and
a case where R¹ and R¹⁰ are simultaneously isocyanates is further excluded.

3. The electrical steel sheet adhesive coating composition of claim 1, wherein:
in Chemical Formula 1,
any one of R¹ to R⁵ is an isocyanate, any one of R⁶ to R¹⁰ is an isocyanate, and
a case where any one of R¹ to R⁵ and any one of R⁶ to R¹⁰ are simultaneously isocyanates symmetrically around L is further excluded.

4. The electrical steel sheet adhesive coating composition of claim 1, wherein:
the aromatic diisocyanate monomer represented by Chemical Formula 1 is represented by the following Chemical Formula 2: 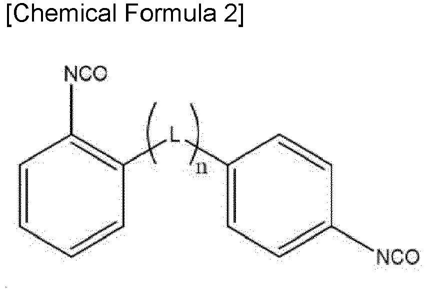
in Chemical Formula 2,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.

5. The electrical steel sheet adhesive coating composition of claim 1, wherein:
the polyol is a compound represented by the following Chemical Formula 3:
[Chemical Formula 3] HO-R'-OH
in Chemical Formula 3,
R' is a substituted or unsubstituted C1 to C10 alkyl group, a substituted or unsubstituted C6 to C20 aryl group, or a substituted or unsubstituted C5 to C20 heteroaryl group.

6. The electrical steel sheet adhesive coating composition of claim 1, wherein:
the polyurethane resin contains 30 to 50 wt% of the aromatic diisocyanate monomer and 50 to 70 wt% of the polyol.

7. The electrical steel sheet adhesive coating composition of claim 1, wherein:
the epoxy resin has a molecular weight of 5,000 to 20,000 and a hydroxyl value of 2 to 20 mgKOH/g.

8. The electrical steel sheet adhesive coating composition of claim 1, further comprising:
one or more selected from the group consisting of a coupling agent, a wetting agent, a curing agent, and a curing catalyst.

9. The electrical steel sheet adhesive coating composition of claim 8, wherein:
the coupling agent is contained in an amount of 0.2 parts by weight to 3 parts by weight with respect to 100 parts by weight of the mixed resin.

10. The electrical steel sheet adhesive coating composition of claim 8, wherein:
the curing agent is contained in an amount of 0.5 parts by weight to 2 parts by weight with respect to 100 parts by weight of the mixed resin.

11. The electrical steel sheet adhesive coating composition of claim 8, wherein:
the curing catalyst is contained in an amount of 0.1 parts by weight to 1 part by weight with respect to 100 parts by weight of the mixed resin.

12. The electrical steel sheet adhesive coating composition of claim 8, wherein:
the wetting agent is contained in an amount of 0.05 parts by weight to 0.5 parts by weight with respect to 100 parts by weight of the mixed resin.

13. An electrical steel sheet laminate comprising:
a plurality of electrical steel sheets; and
a fusion layer located between the plurality of electrical steel sheets,
wherein the fusion layer contains a mixed resin of a polyurethane resin and an epoxy resin,
the mixed resin includes, with respect to 100 parts by weight of the mixed resin, 55 to 98 parts by weight of the polyurethane resin and 2 to 45 parts by weight of the epoxy resin, and
the polyurethane resin is formed by reacting an aromatic diisocyanate monomer represented by the following Chemical Formula 1 and a polyol: 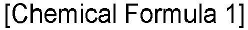 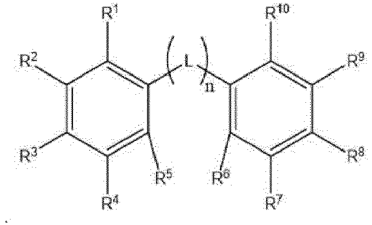
in Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is an isocyanate group,
any one of R⁶ to R¹⁰ is an isocyanate group,
a case where R³ and R⁸ are simultaneously isocyanate groups is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any integer from 1 to 10.

14. A method for manufacturing an electrical steel sheet laminate, the method comprising:
applying an adhesive coating composition to one surface or both surfaces of an electrical steel sheet and then curing the adhesive coating composition to form an adhesive coating layer; and
stacking a plurality of electrical steel sheets in which the adhesive coating layer is formed and performing heat fusion to form a fusion layer,
wherein the adhesive coating composition contains a mixed resin of a polyurethane resin and an epoxy resin,
the mixed resin includes, with respect to 100 parts by weight of the mixed resin, 55 to 98 parts by weight of the polyurethane resin and 2 to 45 parts by weight of the epoxy resin, and
the polyurethane resin is formed by reacting an aromatic diisocyanate monomer represented by the following Chemical Formula 1 and a polyol: 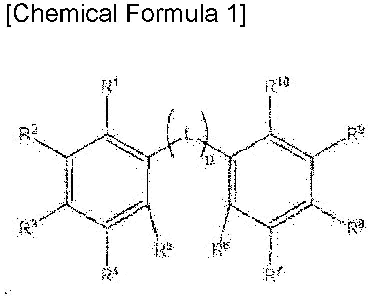
in Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is an isocyanate group,
any one of R⁶ to R¹⁰ is an isocyanate group,
a case where R³ and R⁸ are simultaneously isocyanate groups is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any integer from 1 to 10.
